(19) Europäisches Patentamt / European Patent Office / Office européen des brevets

(11) **EP 4 331 701 A1**

(12) **EUROPEAN PATENT APPLICATION**
published in accordance with Art. 153(4) EPC

(43) Date of publication:
**06.03.2024 Bulletin 2024/10**

(21) Application number: **22748214.8**

(22) Date of filing: **28.01.2022**

(51) International Patent Classification (IPC):
**B01D 15/00** (2006.01)    **B01J 20/26** (2006.01)
**B01J 20/28** (2006.01)    **B01J 20/30** (2006.01)

(86) International application number:
**PCT/CN2022/074530**

(87) International publication number:
**WO 2022/247337 (01.12.2022 Gazette 2022/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority:   **28.05.2021   CN 202110595146**

(71) Applicant: **Guangzhou Koncen Bioscience Co., Ltd.**
**Guangzhou, Guangdong 510660 (CN)**

(72) Inventors:
• **AN, Hongtao**
  **Guangzhou, Guangdong 510660 (CN)**

• **YANG, Zhenggen**
  **Guangzhou, Guangdong 510660 (CN)**
• **LI, Yonggui**
  **Guangzhou, Guangdong 510660 (CN)**
• **NIU, Yuewei**
  **Guangzhou, Guangdong 510660 (CN)**
• **WANG, Shengsheng**
  **Guangzhou, Guangdong 510660 (CN)**
• **HUANG, Weijun**
  **Guangzhou, Guangdong 510660 (CN)**
• **CHEN, Xiaoyuan**
  **Guangzhou, Guangdong 510660 (CN)**

(74) Representative: **Scholl, Matthias**
**Friedrichstraße 114a**
**10117 Berlin (DE)**

(54) **MODIFIED MACROPOROUS ADSORPTION RESIN, PREPARATION METHOD THEREFOR AND USE THEREOF**

(57)    A preparation method of the modified macroporous adsorbent resin includes: preparing a macroporous adsorbent resin that includes a surface including a plurality of double bonds; and mixing water and an oxidizing agent with the macroporous adsorbent resin for a one-step oxidization reaction, thus oxidizing the plurality of double bonds into a plurality of hydroxyl groups. The oxidizing agent is a mixture of sulfuric acid and peroxyacetic acid, hypochlorite, periodate, a mixture of hypochlorous acid and hypochlorite, or a mixture of hydrogen peroxide and peroxyacetic acid. The hypochlorite is at least one selected from sodium hypochlorite, potassium hypochlorite and calcium hypochlorite; the periodate is at least one selected from sodium periodate and potassium periodate.

FIG. 3

EP 4 331 701 A1

**Description**

The disclosure related to the field of polymer materials, and more particularly, to a modified macroporous adsorbent resin and preparation method and use thereof.

As early as 1974, macroporous adsorbent resins have already been utilized for absorption of barbiturates and glutamine from blood (see patent document US3794584A). Typically, the macroporous adsorbent resins are synthesized by using a high content (> 50%) of divinylbenzene as a cross-linking agent, and the finished products have a specific surface area of 500 - 800 $m^2$/g. As a cross-linking agent, chloromethyl ethers are mixed with the finished products for a Fridel-Crafts reaction, resulting in a secondary cross-linking. As a result, the specific surface of the macroporous adsorbent resins is increased to at least 1000 $m^2$/g (see literature "Wang Jiaxing et al, Preparation and Application of Biochemical Separation Media, Chemical Industry Press, Beijing, P84"). The skeleton structure of the macroporous adsorbent resins is formed through free-radical suspension polymerization of styrene monomers and divinylbenzene, which is non-polar and non-selective, featuring poor blood compatibility.

Conventional methods of improving the blood compatibility of the macroporous adsorption resin are detailed as follows. 1) the macroporous adsorption resin is cross-linked again to form a modified adsorption resin with high specific surface area for absorbing a blood-compatible polymer (such as heparin, albumin, xanthan gum, hydroxyethyl cellulose, etc.); and the adsorption method is a physical process while the absorbed material may fall off during therapeutic use. 2) As an activating group, chloromethyl is substituted on a para-position of a benzene ring of a polystyrene unit, grafted to polyethylene glycol (PEG) or a functional spacer arm (such as 2-ethanolamine) and is then grafted to heparin, choline or serine, or carboxyl; this method requires chloromethyl ether, which is a carcinogen that needs to be cleaned up through a complicated process that generates hazardous waste, increasing production costs. 3) The macroporous adsorption resin is copolymerized with a hydrophilic monomer (such as hydroxyethyl methacrylate (HEMA)) to possess a hydrophilic group; because the resin production is environmentally unfriendly, conventional manufactures have mature production lines and have no motive to develop a new one; therefore, there are no relevant applied products yet. 4) Hydrophilic monomers (e.g. HEMA, N-alkyl acrylamide, acrylates) are grafted to the double bonds on the surface of the macroporous resin; this reaction process involves a secondary free-radical polymerization on the surface of the macroporous resin, in which the chain length of the polymer and the thickness of the grafted layer are uncontrollable, thus affecting the pore structure parameters of the macroporous adsorption resin, such as pore volume, porosity and pore size, etc. 5) The double bonds on the surface of the macroporous resin are oxidized to epoxy groups by using m-chloroperoxybenzoic acid, hydrogen peroxide, a complex of hydrogen peroxide and 1-(3-dimethylaminopropyl)-3-ethylcarbodiimide (EDC), a complex of sodium hypochlorite, sodium bromide and sulfuric acid, UV light used in combination of hydrogen peroxide, organic peroxy acids (such as m-chloroperoxybenzoic acid, peroxyacetic acid, peroxybenzoic acid, trifluoroperoxyacetic acid, etc.), and other oxidizing substances; then the oxidized macroporous resin may be modified through a further complicated process in which a large number of harmful organic solvents are used for swelling and by-products derived from oxidation of meta-chloroperoxybenzoic acid and peroxybenzoic acid is formed; m-chlorobenzoic acid and benzoic acid are easily absorbed by the macroporous adsorption resin and hence are difficult to remove; and the harmful organic solvents and compounds pollute the environment, resulting in a more complicated post-treatment process. In addition, since the epoxy groups are partially oxidized during modification process, the density of the epoxy groups must be monitored, making quantitative control of the reaction difficult.

To solve the aforesaid problems, the disclosure provides a modified macroporous adsorbent resin and a preparation method and use thereof. The method improves the hydrophilicity of a macroporous adsorbent resin, the operation is simple, no organic solvents involved, and less by-products are formed; the by-products are simply treated and converted into non-toxic substances that are harmless to the environment; and the preparation method eliminates the use or generation of hazardous substances, thus improving safety in clinical application.

The preparation method of the modified macroporous adsorbent resin comprises:

preparing a macroporous adsorbent resin that comprises a surface comprising a plurality of double bonds; and

mixing water and an oxidizing agent with the macroporous adsorbent resin for a one-step oxidization reaction, thus oxidizing the plurality of double bonds into a plurality of hydroxyl groups;

the oxidizing agent is a mixture of sulfuric acid and peroxyacetic acid, hypochlorite, periodate, a mixture of hypochlorous acid and hypochlorite, or a mixture of hydrogen peroxide and peroxyacetic acid;

the hypochlorite is at least one selected from sodium hypochlorite, potassium hypochlorite and calcium hypochlorite; the periodate is at least one selected from sodium periodate and potassium periodate.

In a class of this embodiment, the one-step oxidization reaction is carried out at 10°C - 30°C.

In a class of this embodiment, the one-step oxidization reaction is carried out for 2 - 20 h.

In a class of this embodiment, the oxidizing agent is the mixture of sulfuric acid and peroxyacetic acid; and the one-step oxidization reaction is carried out as follows:

mixing sulfuric acid and peroxyacetic acid with water to form an aqueous solution;

mixing the aqueous solution with the macroporous adsorbent resin;

the aqueous solution comprises sulfuric acid with a mass concentration of 1% - 5% and peroxyacetic acid with a mass concentration of 0.15% - 15%.

In a class of this embodiment, the oxidizing agent is hypochlorite; and the one-step oxidization reaction is carried out as follows:

mixing hypochlorite with water to form an aqueous solution;

mixing the aqueous solution with the macroporous adsorbent resin;

the aqueous solution comprises hypochlorite with a mass concentration of 0.5% - 10%.

In a class of this embodiment, the oxidizing agent is periodate; and the one-step oxidization reaction is carried out as follows:

mixing periodate with water to form an aqueous solution;

mixing the aqueous solution with the macroporous adsorbent resin;

the aqueous solution comprises 0.1 - 1 M periodate.

In a class of this embodiment, the oxidizing agent is a mixture of hydrogen peroxide and peroxyacetic acid; and the one-step oxidization reaction is carried out as follows:

mixing hydrogen peroxide and peroxyacetic acid with water to form an aqueous solution;

mixing the aqueous solution with the macroporous adsorbent resin;

the aqueous solution comprises hydrogen peroxide with a mass concentration of 0.1% - 10% and peroxyacetic acid with a mass concentration of 0.1%-10%.

The disclosure further provides the modified macroporous adsorbent resin.

The disclosure further provides a functional resin comprising the modified macroporous adsorbent resin and a plurality of reactive groups grafted to the corresponding plurality of hydroxyl groups on the surface of the modified macroporous adsorbent resin.

In a class of this embodiment, the plurality of reactive groups is an epoxy group; and/or

the functional resin further comprises a plurality of ligand groups grafted to the plurality of reactive groups.

The disclosure further provides use of the modified macroporous adsorbent resin or the functional resin for absorbing a biological component.

In a class of this embodiment, the "biological component" as used herein refers to a component in blood.

The following advantages are associated with the modified macroporous adsorbent resin, and methods of preparation and use of the disclosure.

The preparation method uses a particular oxidizing agent to oxidize the plurality of double bonds on the surface of the macroporous adsorbent resin; thus, the plurality of double bonds are oxidized in the one step in the water and converted into the plurality of hydroxyl groups having hydrophilic properties; the by-products are reduced by the preparation method, treated by a simple post-treatment process, and converted into non-toxic substances that are harmless to the environment; the preparation method eliminates the use or generation of hazardous substances. To improve the hydrophilicity of the macroporous adsorbent resin, the preparation method is simple and uses non-organic solvents, making it safer in clinical application.

Compared with the prior art macroporous adsorbent resins, the modified macroporous adsorbent resin of the disclosure comprises a stable pore structure that has a good adsorption capacity.

The preparation method involves no require any organic solvents with high toxicity and organic reagents that can be tightly adsorbed by the macroporous adsorbent resin; which is friendly to the environment and improves safety in clinical application. The macroporous adsorbent resin is modified to achieve a higher hydrophilicity so as to be more compatible with the blood.

In addition, the plurality of the hydroxyl groups remaining on the macroporous adsorbent resin is activated by connecting to a plurality of spacer arms, which facilitates an in-situ control of grating of the plurality of ligand groups, thus modifying the hydrophilicity and functionality of the macroporous adsorbent resin.

FIG. 1 is a picture showing a contact angle test of a macroporous adsorbent resin, according to Example 1 of the disclosure;

FIG. 2 is a picture showing a contact angle test of a modified macroporous adsorbent resin according to Example 1 of the disclosure;

FIG. 3 is a picture showing a hydrophilicity of a macroporous adsorbent resin and a modified macroporous adsorbent resin according to Example 1 of the disclosure (A. After modification; B. Before modification); and

FIG. 4 is a picture showing a blood compatibility of a macroporous adsorbent resin and a modified macroporous adsorbent resin according to Example 1 of the disclosure (C. After modification; D. Before modification).

To further illustrate, embodiments detailing a modified macroporous adsorbent resin and preparation method and use thereof are described below. It should be noted that the following embodiments are intended to describe and not to limit the disclosure.

Unless otherwise defined, all technical and scientific terms used herein have the same meanings known to those skilled in the art of the disclosure. The terms used in the specification of the disclosure herein are only for the purpose of describing specific embodiments, and are not intended to limit the disclosure.

A preparation method of a modified macroporous adsorbent resin comprises:

preparing a macroporous adsorbent resin that comprises a surface comprising a plurality of double bonds;

mixing (a solvent) water and an oxidizing agent with the macroporous adsorbent resin for a one-step oxidization reaction, thus oxidizing the plurality of double bonds into a plurality of hydroxyl groups;

Understandably, the term "one-step oxidization reaction" as used herein refers to a reaction that takes place in one step in which the plurality of double bonds is oxidized to a plurality of hydroxyl groups, without any intermediate process or products. And no epoxide intermediate is formed in the one-step oxidization reaction as compared to the conventional methods.

In certain examples, only water is used as a solvent for the one-step oxidization reaction. Further, no organic solvents are necessary to the one-step oxidization reaction.

In certain examples, the oxidizing agent is a water-soluble reagent with strong oxidizing properties. Further, the oxidizing agent is a mixture of sulfuric acid and peroxyacetic acid, hypochlorite, periodate, or a mixture of hydrogen peroxide and peroxyacetic acid; the hypochlorite is at least one selected from sodium hypochlorite, potassium hypochlorite and calcium hypochlorite; the periodate is at least one selected from sodium periodate and potassium periodate. The oxidizing agent is used to oxidize the double bonds on the surface of the macroporous adsorbent resin, resulting in fewer by-products; the by-products are simply treated and converted into non-toxic substances that are harmless to the environment; and the preparation method is simple and improves clinical safety. Preferably, the oxidizing agent is a mixture of hydrogen peroxide and peroxyacetic acid.

In certain examples, the one-step oxidization reaction is carried out at 10°C - 30°C, preferably, 15°C - 25°C.

In certain examples, the one-step oxidization reaction is carried out for 2 - 20 h, preferably, 4 - 10 h.

In certain examples, the reaction mixture is stirred at 150 - 200 rpm during oxidation.

In certain examples, the one-step oxidization reaction is carried out to yield a product; and the product is purified by washing and/or neutralization.

In certain examples, the oxidizing agent is a mixture of sulfuric acid and peroxyacetic acid; and the one-step oxidization reaction is carried out as follows:

mixing sulfuric acid and peroxyacetic acid with water to form an aqueous solution;

mixing the aqueous solution with the macroporous adsorbent resin to yield the product;

the aqueous solution comprises contains sulfuric acid with a mass concentration of 1% - 5% and peroxyacetic acid with a mass concentration of 0.15% - 15%; preferably, the aqueous solution comprises contains sulfuric acid with a mass concentration of 1% - 3% and peroxyacetic acid with a mass concentration of 1% - 3%.

In certain examples, every 10 g of the macroporous adsorbent resin is mixed with 20 - 100 mL of the aqueous solution; preferably, every 10 g of the macroporous adsorbent resin is mixed with 30 - 70 mL of the aqueous solution.

In certain examples, the product is washed and neutralized after the one-step oxidization reaction; further, washing refers to cleaning the product with anhydrous ethanol and water successively; and neutralizing refers to washing the product with an alkaline aqueous solution and water successively until the product is neutral.

In certain examples, the oxidizing agent is hypochlorite, and the one-step oxidization reaction is carried out as follows:

mixing hypochlorite with water to form an aqueous solution;

mixing the aqueous solution with the macroporous adsorbent resin to yield the product;

the aqueous solution comprises hypochlorite with a mass concentration of 0.5% - 10%, preferably, 0.5% - 2%.

In certain examples, every 10 g of macroporous adsorbent resin is mixed with 20 - 100 mL of the aqueous solution; preferably, every 10 g of the macroporous adsorbent resin is mixed with 30 - 70 mL of the aqueous solution.

In certain examples, the product is washed and neutralized after the one-step oxidization reaction; further, washing refers to cleaning the product with anhydrous ethanol and water successively; and neutralizing refers to washing the product with an alkaline aqueous solution and water successively until the product is neutral.

In certain examples, the oxidizing agent is periodate, and the one-step oxidization reaction is carried out as follows:

mixing periodate with water to form an aqueous solution;

mixing the aqueous solution with the macroporous adsorbent resin to yield the product;

the aqueous solution comprises 0.1 - 1 M periodate, preferably, 0.1 - 0.5 M periodate.

In certain examples, every 10 g of macroporous adsorbent resin is mixed with 20 - 100 mL of the aqueous solution; preferably, every 10 g of the macroporous adsorbent resin is mixed with 30 - 70 mL of the aqueous solution.

In certain examples, the product is washed and neutralized after the one-step oxidization reaction; further, washing refers to cleaning the product with water.

In a class of this embodiment, the oxidizing agent is a mixture of hydrogen peroxide and peroxyacetic acid; and the one-step oxidization reaction is carried out as follows:

mixing hydrogen peroxide and peroxyacetic acid with water to form an aqueous solution;

mixing the aqueous solution with the macroporous adsorbent resin to yield the product;

the aqueous solution comprises hydrogen peroxide with a mass concentration of 0.1% - 10% and peroxyacetic acid with a mass concentration of 0.1% - 10%; preferably, the aqueous solution comprises hydrogen peroxide with a mass concentration of 0.5% - 2% and peroxyacetic acid with a mass concentration of 0.5% - 2%.

In certain examples, every 10 g of the macroporous adsorbent resin is mixed with 20 - 100 mL of the aqueous solution; preferably, every 10 g of the macroporous adsorbent resin is mixed with 30 - 70 mL of the aqueous solution.

In certain examples, the product is washed and neutralized after the one-step oxidization reaction; further, washing refers to cleaning the product with water; and neutralizing refers to washing the product with an alkaline aqueous solution and water successively until the product is neutral.

The product is the modified macroporous adsorbent resin of the disclosure whose surface comprises the plurality of hydroxyl groups with hydrophilicity and blood compatibility.

The modified macroporous adsorbent resin has a stable pore structure and a high adsorption capacity as compared to the prior art macroporous adsorbent resins.

Further, the modified macroporous adsorbent resin is activated or processed so as to be easily grafted to a functional group for further functional modification.

A functional resin comprises the modified macroporous adsorbent resin and a plurality of reactive groups grafted to the corresponding plurality of hydroxyl groups on the surface of the modified macroporous adsorbent resin.

The plurality of reactive groups acts as a plurality of spacer arms for functional modification. In certain examples, the plurality of reactive groups is an epoxy group.

In certain examples, the functional resin further comprises a plurality of ligand groups grafted to the plurality of reactive groups. Specifically, the plurality of ligand groups is at least one selected from the groups comprising a protein, a nucleotide, and an organic compound containing an amino group.

A method of use of the modified macroporous adsorbent resin or the functional resin is provided for use in absorption of biological component in non-disease diagnostic and therapeutic fields, such as purification of blood samples separated from the human body. Further, the term "biological component" as used herein refers to a component in blood.

To further illustrate the disclosure, embodiments detailing the methods of uses of the modified macroporous adsorbent resin and functional resin are described below. It should be noted that the following embodiments are intended to describe and not to limit the disclosure.

The following are specific examples.

**Example 1**

A preparation method of a modified macroporous adsorbent resin by using an oxidizing agent containing sulfuric acid and peroxyacetic acid, and the method comprising:

(1) 10 g of a macroporous adsorbent resin was added to 50 mL of an aqueous solution comprising 2% sulfuric acid and 2% peroxyacetic acid to form a reaction mixture; and the reaction mixture was stirred at 20°C and 180 rpm for 6 hours;

(2) after the reaction was completed, a modified macroporous adsorbent resin was formed and washed with anhydrous ethanol and purified water successively; and

(3) the modified macroporous adsorbent resin was washed with five times the volume of 1 M NaOH solution and washed with purified water until neutral.

**Example 2**

A preparation method of the modified macroporous adsorbent resin by using an oxidizing agent containing sodium hypochlorite, and the method comprising:

(1) 10 g of macroporous adsorbent resin was added to 50 mL of an aqueous solution comprising 1% sodium hypochlorite to form a reaction mixture; and the reaction mixture was stirred at 20°C and 180 rpm for 6 hours;

(2) after the reaction was completed, a modified macroporous adsorbent resin was formed and washed with anhydrous ethanol and purified water successively; and

(3) the modified macroporous adsorbent resin was washed with five times the volume of 1 M NaOH solution, and washed with purified water until neutral.

**Example 3**

A preparation method of the modified macroporous adsorbent resin by using an oxidizing agent containing sodium periodate, and the method comprising:

(1) 10 g of macroporous adsorbent resin was added to 50 mL of an aqueous solution comprising 0.3 M sodium periodate to form a reaction mixture; and the reaction mixture was stirred at 20°C and 180 rpm for 6 hours; and

(2) after the reaction was completed, a modified macroporous adsorbent resin was formed and washed with purified water.

**Example 4**

A preparation method of the modified macroporous adsorbent resin by using an oxidizing agent containing hydrogen peroxide and peroxyacetic acid; and the method comprising:

(1) 10 g of macroporous adsorbent resin was added to 50 mL of an aqueous solution comprising 1% hydrogen peroxide and 1% peroxyacetic acid to form a reaction mixture; and the reaction mixture was stirred at 20°C and 180 rpm for 6 hours;

(2) after the reaction was completed, a modified macroporous adsorbent resin was formed and washed with purified water; and

(3) the modified macroporous adsorbent resin was washed with five times the volume of 1 M NaOH solution, and washed with purified water until neutral.

**Comparison Example 1**

A preparation method of a macroporous adsorbent resin by using an oxidizing agent containing meta-chloroperoxybenzoic acid; and the method comprising:

(1) 10 g of macroporous adsorbent resin was immersed in 50 mL of dichloromethane for 24 hours, and then taken out and transferred to another 50 mL of dichloromethane to form a reaction mixture, and cooled in an ice/water bath (at 0 - 4°C); 1.0 g of peroxy-m-chlorobenzoic acid was slowly added and stirred at 20°C and 180 rpm for 0.5 - 4 hours;

(2) after the reaction was completed, a modified macroporous adsorbent resin was formed and washed with anhydrous ethanol and purified water successively; and

(3) the modified macroporous adsorbent resin was washed with five times the volume of 1 M NaOH solution, and stirred at 20°C and 180 rpm for 24 hours, so that the plurality of epoxy groups was converted into the plurality of hydroxyl groups; and the modified macroporous adsorbent resin was washed with purified water until neutral.

**Comparison Example 2**

A preparation method of a macroporous adsorbent resin by using an oxidizing agent containing hydrogen peroxide and sulfuric acid; and the method comprising:

(1) 50 mL of purified water, 3% sulfuric acid by volume, and 10 mL of 30% hydrogen peroxide were successively added to 10 g of macroporous adsorbent resin to form a reaction mixture; the reaction mixture was stirred at 20°C and 180 rpm for 48 hours;

(2) after the reaction was completed, a modified macroporous adsorbent resin was formed and washed with anhydrous ethanol and purified water successively;

(3) the modified macroporous adsorbent resin was washed with five times the volume of 1 M NaOH solution, and stirred at 20°C and 180 rpm for 24 hours, so that the plurality of epoxy groups was converted into the plurality of hydroxyl groups; and the modified macroporous adsorbent resin was washed with purified water until neutral.

Table 1 shows a comparison of characteristics of the modified macroporous adsorbent resins in Examples 1-4 and Comparison examples 1-2.

Table1

| | Reaction characteristic | By-product | Degree of modification | Functional modification |
|---|---|---|---|---|
| Comparison example 1 | Reaction is a fast strong oxidation process; dichloromethane is used as an organic solvent; by-product is chlorobenzoate that is easily absorbed by the microporous adsorbent resin and hence is difficult to remove. | Chlorobenzoate | Fair | Reaction is uncontrollable ; epoxy groups are partially hydrolyzed to hydroxyl groups, or used for further functional modification. |
| Comparison example 2 | Reaction is slow | No | Poor | Reaction is uncontrollable ; epoxy groups are partially hydrolyzed to hydroxyl groups, or used for further functional modification. |
| Example 1 | Reaction is a fast strong oxidation process; by-products is non-toxic and easily removed. | Acetate | Good | Reaction occurs in one step and therefore grafting of functional groups easily takes place. |
| Example 2 | Reaction is a fast strong oxidation process; by-products is non-toxic and easily removed. | Hydrochloride | Good | Reaction occurs in one step and therefore functional modification easily takes place. |
| Example 3 | Reaction is slow; by-products is easily removed. | Iodate | Good | Reaction is controllable; carbonyl group is produced for functional modification |
| Example 4 | Reaction is a fast strong oxidation process; by-products is non-toxic and easily removed. | Acetate | Excellent | Reaction occurs in one step and therefore functional modification easily takes place. |

**Example 5**

Detection of the presence of the plurality of epoxy groups in the different modified macroporous adsorbent resins in Examples 1-4 and Comparison examples 1-2.

A method for detecting the plurality of epoxy groups comprises:
Preparation of a pyridine hydrochloride solution: 1.7 mL of concentrated hydrochloric acid was dissolved in 98.3 mL of pyridine, shaken and allowed to stand for 4 hours.

Detection of the plurality of epoxy groups: 0.5 g of a sample (refers to one of the modified macroporous adsorbent resins derived from Examples 1-4, step 2) of Comparison examples 1-2, and step 3) of Comparison examples 1-2) was placed in a conical flask; 25 mL of the pyridine hydrochloride solution was aspirated by a pipette and transferred to the conical flask to form a reaction mixture, followed by an addition of a magnet of a desired size; and methyl silicone oil was heated under reflux at 138°C for 40 min; the reaction mixture was cooled to room temperature, followed by an addition of 3 drops of phenolphthalein; the solution was titrated with 0.1 M NaOH solution until the slight red color did not disappear in 30s. Blank titration are done under controlled conditions.

$$\text{Epoxy group} = (V_1 - V_2) - C/M$$

$V_1$ is the volume (mL) of a standardized NaOH solution consumed for the blank titration;

$V_2$ is the volume (mL) of the standardized NaOH solution consumed for the detection titration;

C is the concentration (mol/L) of the standardized NaOH solution; and

M is the weight (g) of the sample.

The detection results of the epoxy group were shown in Table 2.

Table 2

| | Content of epoxy groups after oxidation | Content of epoxy groups after hydrolysis |
|---|---|---|
| Comparison example 1 | 0.2 mmol/g | ND |
| Comparison example 2 | 0.05 mmol/g | ND |
| Example 1 | ND | NH |
| Example 2 | ND | NH |
| Example 3 | ND | NH |
| Example 4 | ND | NH |
| Note: ND, not detected; NH, no hydrolysis; the content of the plurality of epoxy groups after oxidation was calculated by using the modified macroporous adsorbent resins respectively derived from Examples 1-4 and step 2) of Comparison examples 1-2); and the content of the plurality of epoxy groups after hydrolysis was calculated by using the modified macroporous adsorbent resins respectively derived from step 3) of Comparison examples 1-2. | | |

**Example 6**

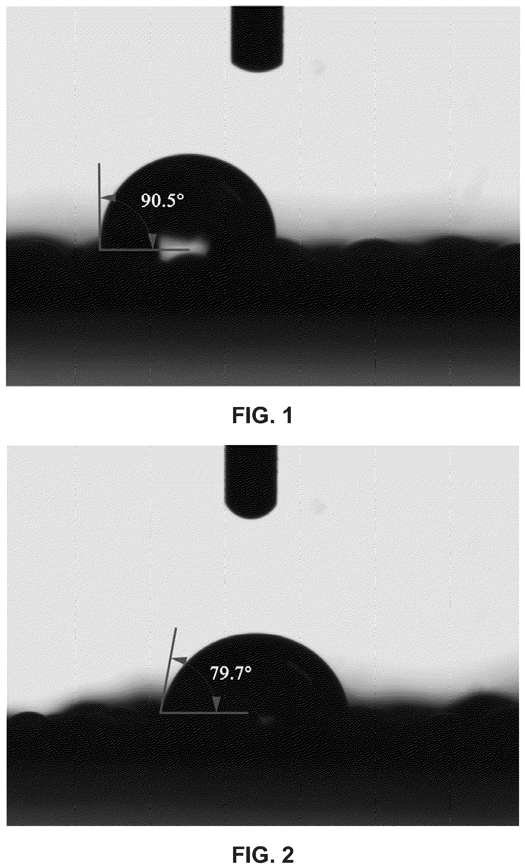

Contact angle test of the modified macroporous adsorbent resin.
The macroporous adsorbent resin and the modified macroporous adsorbent resin in Example 4 were ground, pressed into a sheet of 13 mm in diameter and 1 mm of thickness by a hydraulic tablet press, and then undergone a contact angle test. The test results are shown in FIGS. 1 and 2, as well as Table 3.

Table 3

| Sample | Contact angle |
|---|---|
| Macroporous adsorbent resin | 90.5° |
| Modified macroporous adsorbent resin | 79.7° |

The results showed that the contact angle of the macroporous adsorbent resin is decreased from 90.5° to 79.7° after modification, which indicates that the aqueous solution containing hydrogen peroxide and peroxyacetic acid oxidizes plurality of double bounds to the plurality of hydroxyl groups, thus increasing the hydrophilicity of the macroporous adsorbent resin.

**Example 7**

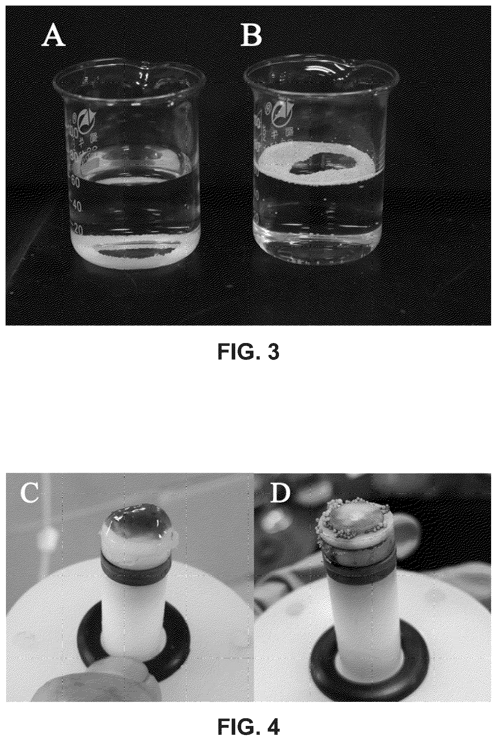

Hydrophilicity test of the modified macroporous adsorbent resin.
The macroporous adsorbent resin and the modified macroporous adsorbent resin in Example 4 were dried at 105°C for 4 hours, followed by an addition of the purified water; and the hydrophilicity of the macroporous adsorbent resin and the modified macroporous adsorbent resin was then observed by naked eyes. As shown in FIG. 3, the macroporous adsorbent resin was floated on the surface of the purified water; but the modified macroporous adsorbent resin was sank down to the bottom of the purified water due to the hydrophilicity of the plurality of hydroxyl groups.

**Example 8**

Blood compatibility test of the modified macroporous adsorbent resin.

5 g (wet weight) of the macroporous adsorbent resin and the modified macroporous adsorbent resin in Example 4 were transferred to separate chromatography columns; 50 mL of anticoagulated bovine whole blood was circulated at 10 mL/min through a cooled reflux system for 2 hours; a flow rate and obstruction were determined for each chromatography column; after the reflux, each chromatography column was opened such that the end face of each chromatography column could be observed.

As shown in FIG. 4, the results showed that the anticoagulated bovine whole blood had a lower flow rate after flowing through the macroporous adsorbent resin for half an hour; and the chromatography column was blocked due to high amount of material attached to the end face. Two hours after the modified macroporous adsorbent resin was used, the anticoagulated bovine whole blood was still flowing and the chromatography column was unblocked since there was no material on the end face.

The results showed that hydrogen peroxide and peroxyacetic acid were used to modify the macroporous adsorbent resin, resulting in increased blood compatibility.

**Example 9**

Adsorption test of the modified macroporous adsorbent resin.

2.94g (wet weight) of the modified macroporous resin in Example 4 was added to a 50 mL conical flask, followed by addition of 25 mL of 100 mg/L pentobarbital sodium solution, 25 mL of 35 mg/L creatinine solution, 25 mL of 25 mg/L vitamin $B_{12}$ solution, 25 mL of phosphate-buffered saline (PBS) solution containing 600 pg/mL IL-6, and 25mL of 500 pg/ml of TNF-$\alpha$ solution; and the mixture was shaken at 37°C and 60 rpm for 2 hours. An ultraviolet-visible spectrophotometer was used to measure an absorbance of the pentobarbital sodium solution at 240 nm, an absorbance of the creatinine solution at 232 nm, an absorbance of the vitamin $B_{12}$ solution at 361 nm; an ELISA kit was used to quantify concentrations of the IL-6 solution and the TNF-$\alpha$ solution; and as shown in Table 4, a clearance rate was estimated and was basically unchanged before and after modification.

Table 4

| Material | Pentobarbital sodium | Creatinine | Vitamin $B_{12}$ | IL-6 | TNF-$\alpha$ |
|---|---|---|---|---|---|
| Clearance rate before modification | 96.12% | 19.22% | 94.58% | 95.6% | 93.2% |
| Clearance rate after modification | 95.46% | 18.17% | 94.44% | 96.2% | 91.3% |

**Example 10**

Functional modification of the modified macroporous adsorbent resin by using polymyxin B sulfate as a ligand. A method for modifying the functionality of the modified macroporous adsorbent resin, comprising:

(1) 10 g of the modified macroporous adsorption resin in Example 4 was weight, followed by addition of 10 mL of 1 M sodium hydroxide solution, 3 mL of epichlorohydrin, 7 mL of 1,4-butanediol diglycidyl ether, and 0.02 g of sodium borohydride; the mixture was stirred, allowed to react at 30°C for 1.5 hours, and rinsed with plenty of water for injection, thus yielding an epoxy-activated macroporous resin.

(2) 10 mL of 50 mg/mL polymyxin B sulfate (PMB) solution (prepared by adding 0.2 mol/L phosphate buffer) was added to the epoxy-activated macroporous resin, adjusted to a pH of 7.4, and allowed to react at 37°C for 20 hours; the resulting product was washed with 20 times the volume of water for injection, followed by addition of 20 mL of 0.2 M ethanolamine solution for blocking unreacted epoxy groups; then the reaction mixture was allowed to react at 20°C for 10 hours and washed with plenty of water for injection, thus yielding a PMB-modified macroporous adsorbent resin.

**Example 11**

Adsorption test of the PMB-modified macroporous adsorbent resin.

0.2 g of the PMB-modified macroporous resin in Example 10 was added to a 10 mL conical flask, followed by addition of 6 mL of plasma containing 1 EU/mL endotoxin, 600 pg/mL IL-6 solution and 100 ng/ml TNF-$\alpha$ solution; the mixture was shaken (at 37°C and 180 rpm ) for 2 hours; a turbidimetric method was used to calculate a concentration of endotoxin after adsorption; an ELISA kit was used to quantify concentrations of the IL-6 solution and the TNF-$\alpha$ solution; and the adsorption rate and clearance rate of the PMB-modified macroporous resin were calculated before and after modification. Test results were shown in Table 5.

Table 5

| Compound | Endotoxin | IL-6 | TNF-α |
|---|---|---|---|
| Clearance rate | 35% | 63.1% | 45.1% |

**Example 12**

Functional modification of the modified macroporous adsorbent resin by using an amino ligand.

(1) 10 g of the modified macroporous adsorption resin in Example 4 was weight, followed by addition of 10 mL of 1 M sodium hydroxide solution, 3 mL of epichlorohydrin, 7 mL of 1,4-butanediol diglycidyl ether, and 0.02 g of sodium borohydride; the mixture was stirred, allowed to react at 30°C for 1.5 hours, and rinsed with plenty of water for injection, thus yielding an epoxy-activated macroporous resin.

(2) 10 mL of 0.1g/mL ethylenediamine solution and 10 mL of 0.1 g/mL 3,3'-diaminodipropylamine were added to the epoxy-activated macroporous resin, and allowed to react at 37°C for 20 hours; the resulting product was washed with 20 times the volume of water for injection, thus yielding an amino-modified macroporous adsorbent resin.

**Example 13**

Adsorption test of the amino-modified macroporous adsorbent resin.
1 mL of the amino-modified macroporous resin in Example 12 was added to 10 mL of plasma bilirubin, shaken (at 37°C and 90 rpm) for 2 hours, and allowed to stand at room temperature; the levels of the plasma bilirubin was measured before and after adsorption, respectively; and the adsorption capacity of the amino-modified macroporous resin was calculated. Test results were shown in Table 5.

Table 6

| Ligand | Bilirubin adsorption capacity |
|---|---|
| Ethylenediamine | 0.5 $\mu$mol/mL |
| 3,3'-Diaminodipropylamine | 0.8 $\mu$mol/mL |

The technical features of the above described embodiments can be combined arbitrarily. To simplify the description, all possible combinations of the technical features in the above described embodiments are not described. However, as long as there is no contradiction in the combination of these technical features, it should be considered as the scope recorded in this specification.
It will be obvious to those skilled in the art that changes and modifications may be made, and therefore, the aim in the appended claims is to cover all such changes and modifications.

**Claims**

1. A method of preparation of a modified macroporous adsorbent resin, **characterized by** comprising:

preparing a macroporous adsorbent resin that comprises a surface comprising a plurality of double bonds; and mixing water and an oxidizing agent with the macroporous adsorbent resin for a one-step oxidization reaction, thus oxidizing the plurality of double bonds into a plurality of hydroxyl groups;

wherein:

the oxidizing agent is a mixture of sulfuric acid and peroxyacetic acid, hypochlorite, periodate, a mixture of hypochlorous acid and hypochlorite, or a mixture of hydrogen peroxide and peroxyacetic acid; and
the hypochlorite is at least one selected from sodium hypochlorite, potassium hypochlorite and calcium hypochlorite; the periodate is at least one selected from sodium periodate and potassium periodate.

**2.** The method of claim 1, **characterized in that** the one-step oxidization reaction is carried out at 10°C - 30°C, and/or the one-step oxidization reaction is carried out for 2 - 20 h.

**3.** The method of claim 1 or 2, **characterized in that** the oxidizing agent is the mixture of sulfuric acid and peroxyacetic acid; and the one-step oxidization reaction is carried out as follows:

mixing sulfuric acid and peroxyacetic acid with water to form an aqueous solution; and
mixing the aqueous solution with the macroporous adsorbent resin;
the aqueous solution comprises sulfuric acid with a mass concentration of 1% - 5% and peroxyacetic acid with a mass concentration of 0.15% -15%.

**4.** The method of claim 1 or 2, **characterized in that** the oxidizing agent is hypochlorite; and the one-step oxidization reaction is carried out as follows:

mixing hypochlorite with water to form an aqueous solution; and
mixing the aqueous solution with the macroporous adsorbent resin;
the aqueous solution comprises hypochlorite with a mass concentration of 0.5% - 10%.

**5.** The method of claim 1 or 2, **characterized in that** the oxidizing agent is periodate; and the one-step oxidization reaction is carried out as follows:

mixing periodate with water to form an aqueous solution; and
mixing the aqueous solution with the macroporous adsorbent resin;
the aqueous solution comprises 0.1 - 1 M periodate.

**6.** The method of claim 1 or 2, **characterized in that** the oxidizing agent is a mixture of hydrogen peroxide and peroxyacetic acid; and the one-step oxidization reaction is carried out as follows:

mixing hydrogen peroxide and peroxyacetic acid with water to form an aqueous solution;
mixing the aqueous solution with the macroporous adsorbent resin;
the aqueous solution comprises hydrogen peroxide with a mass concentration of 0.1% - 10% and peroxyacetic acid with a mass concentration of 0.1% - 10%.

**7.** A modified macroporous adsorbent resin prepared by the method of any one of claims 1-6.

**8.** A functional resin, **characterized by** comprising the modified macroporous adsorbent resin of claim 7 and a plurality of reactive groups grafted to the plurality of hydroxyl groups on the surface of the modified macroporous adsorbent resin.

**9.** The resin of claim 8, **characterized in that** the plurality of reactive groups is an epoxy group; and/or, the functional resin further comprises a plurality of ligand groups grafted to the plurality of reactive groups.

**10.** Use of the modified macroporous adsorbent resin of claim 7 or the functional resin of claim 8 or 9 for absorbing a biological component.

FIG. 1

FIG. 2

FIG. 3

FIG. 4

## INTERNATIONAL SEARCH REPORT

| International application No. |
|---|
| **PCT/CN2022/074530** |

**A.    CLASSIFICATION OF SUBJECT MATTER**

B01D 15/00(2006.01)i;  B01J 20/26(2006.01)i;  B01J 20/28(2006.01)i;  B01J 20/30(2006.01)i

According to International Patent Classification (IPC) or to both national classification and IPC

**B.    FIELDS SEARCHED**

Minimum documentation searched (classification system followed by classification symbols)

B01D15/-;  B01J20/-

Documentation searched other than minimum documentation to the extent that such documents are included in the fields searched

Electronic data base consulted during the international search (name of data base and, where practicable, search terms used)

CNTXT, CNKI, VEN, WED OF SCIENCE: 树脂, 聚合物, 双键, 氧化, 改性, 亲水, 相容性, 羟基, 过氧乙酸, 次氯酸+, 高碘酸, resin, polymer, double bonds, oxida+, modified, hydrophilic, compatibility, hydroxyl group, peracetic acid, hypochlorite, periodate

**C.    DOCUMENTS CONSIDERED TO BE RELEVANT**

| Category* | Citation of document, with indication, where appropriate, of the relevant passages | Relevant to claim No. |
|---|---|---|
| PX | CN 113231046 A (GUANGZHOU KONCEN BIOTECHNOLOGY CO., LTD.) 10 August 2021 (2021-08-10)<br>claims 1-10 | 1-10 |
| A | CN 104492402 A (JAFRON BIOMEDICAL CO., LTD.) 08 April 2015 (2015-04-08)<br>description, paragraphs 5 and 8 | 1-10 |
| A | WO 2006062253 A1 (NIPPON SHOKUBAI CO., LTD. et al.) 15 June 2006 (2006-06-15)<br>entire document | 1-10 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 April 2022** | **29 April 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/074530**

| Patent document cited in search report | | | Publication date (day/month/year) | Patent family member(s) | | | Publication date (day/month/year) |
|---|---|---|---|---|---|---|---|
| CN | 113231046 | A | 10 August 2021 | None | | | |
| CN | 104492402 | A | 08 April 2015 | None | | | |
| WO | 2006062253 | A1 | 15 June 2006 | KR | 20070094741 | A | 21 September 2007 |
| | | | | CN | 101072817 | A | 14 November 2007 |
| | | | | US | 2009239966 | A1 | 24 September 2009 |
| | | | | JP | 2008523196 | A | 03 July 2008 |
| | | | | DE | 602005011491 | D1 | 15 January 2009 |
| | | | | EP | 1838766 | A1 | 03 October 2007 |
| | | | | TW | 200621868 | A | 01 July 2006 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3794584 A

**Non-patent literature cited in the description**

- **WANG JIAXING et al.** Preparation and Application of Biochemical Separation Media. Chemical Industry Press, 84